# EUROPÄISCHE PATENTANMELDUNG

(11) **EP 3 263 964 A1**
(43) Veröffentlichungstag der Anmeldung: **03.01.2018**
(21) Anmeldenummer: 16177469.0
(22) Anmeldetag: 01.07.2016
(51) Int. Cl.: F16L 5/02, E04B 1/68, H02G 3/22, F16J 15/46

(54) **ABDICHTUNG GEGEN WASSERFORTLEITUNG**

(71) Anmelder: Fibre Optics CT GmbH, Consulting & Testing, 70437 Stuttgart (DE)
(72) Erfinder: Wolf, Roland, 70437 Stuttgart (DE)
(74) Vertreter: Jeck, Anton

(57) **Zusammenfassung**

Die Anmeldung umfasst eine Einweg-Abdichtung zum Schutz vor Wassereintritt und Rauchdurchdringung in Zwischenräumen und in Hohlräumen bei Kabelschutzrohren, Kanälen und Wanddurchführungen, die mit Kabeln und/oder Rohren belegt sind. Die Vorrichtung besteht aus einem in der Länge und Breite festgelegten Flachschlauchabdichtkissen 1, das über einen eingeschweißten Thermoplast-Einfüllschlauch 4 oder ein eingeschweißtes Thermoplast umhüllten Metallrohrschlauch 4 mit Luft, flüssigem oder pulverisiertem Medium befüllt werden kann, mit druckdichten Verschlüssen 7 und an den Außenseiten mit einem Quellvlies-Dichtband 5 ausgerüstet ist und nach Druckfüllung über den Thermoplast-Einfüllschlauch 4 oder den Thermoplast umhüllten Metallrohrschlauch 4 durch Verpressen, Verklemmen oder Verschweißen von Metallklemmen 7 oder einer Kombination aus Verpressen, Verklemmen oder Verschweißen von Metallklemmen 7 und Dichtmittel eine Dichtigkeit bis 5m Wassersäule aufweist.

## Beschreibung

Die Erfindung betrifft eine Vorrichtung zur Einweg-Kabel-Abdichtung gegen Wassereintritt und Rauchdurchdringung in Zwischenräumen und in Hohlräumen, Kabelschutzrohren und Wanddurchführungen, die mit Kabeln und/oder Rohren belegt sind.

In der EP 1686 670 B1 ist eine wiederverwendbare Vorrichtung zum Abdichten von Zwischenräumen, Anheben oder Sichern von Werkstücken beschrieben.

In der EP 1867 904 B1 ist eine wiederverwendbare Vorrichtung zum gas- und druckwasserdichten Verschließen von Hohlräumen, zwischen Mauerdurchbrüchen sowie zwischen Kabelkanälen und zur Abdichtung von Zwischenräumen bei Stellwänden beschrieben.

In der PCT/EP 2016/052784 ist eine wiederverwendbare Schutzvorrichtung gegen Wasser- und Rauchfortleitung in Kanälen und Gewerken beschrieben.

Aufgabe der vorliegenden Erfindung ist es, aus Verbundfolie, mit oder ohne metallische Einlage, eine quellvliesbeschichtete Einweg-Abdichtung gegen Wasserfortleitung zu schaffen.

Diese Aufgabe wird mit den Merkmalen des Anspruchs 1 gelöst.
Vorteile dieser Ausgestaltung sind ihre einfache Montage, sowie ihre einfache Demontage und unkritische Entsorgung.

Eine erste vorteilhafte Ausgestaltung der Erfindung, entsprechend Anspruch 2 und 7, ist weitgehend temperaturunabhängig und überdruckdicht.

Eine weitere vorteilhafte Ausgestaltung der Erfindung, entsprechend Anspruch 4 und 6, bietet Dichtheit gegen Wasserfortleitung bis 5m Wassersäule unmittelbar nach Wasserkontakt, den Wegfall einer Wartezeit bis zur Dichtheit nach der Montage und die leichten Demontage, ohne die Gefahr einer Beschädigung von Kabeln oder Rohren.

Eine weitere vorteilhafte Ausgestaltung der Erfindung, entsprechend Anspruch 9, weist eine vergleichsweise lange Brauchbarkeitsdauer von ca. 5 bis 7 Jahren und eine hohe Beständigkeit gegen Chemiekaliengemische und Umwelteinflüsse auf.

Eine weitere vorteilhafte Ausgestaltung der Erfindung, entsprechend Anspruch 11, reduziert den Aufwand und die Gefahr von Beschädigungen in Anwendungen, bei denen die Abdichtung auf Grund von Nachbelegungen oft gewechselt werden muss.

Die Erfindung wird nun anhand von Ausführungsbeispielen näher erläutert. Es zeigen:
- Fig. 1: eine perspektivische, geöffnete Ansicht einer Einweg-Abdichtung gegen Wasserfortleitung,
- Fig. 2: eine perspektivische Ansicht einer der in Fig. 1 gezeigten ähnlichen Einweg-Abdichtung,
- Fig. 3a-3d: eine Querschnittsansicht einer Einweg-Abdichtung nach den Fig. 1 und 2,
- Fig. 4: eine Querschnittsansicht einer der Fig. 3a ähnlichen EinwegAbdichtung,
- Fig. 5: eine perspektivische Ansicht der in den Fig. 3 und 4 gezeigten Kabelschutzrohr- und/oder Rohr-Zwischenraumabdichtung,
- Fig. 6: eine perspektivische Ansicht der in den Fig. 3 und 4 gezeigten Zwischenraumabdichtung.

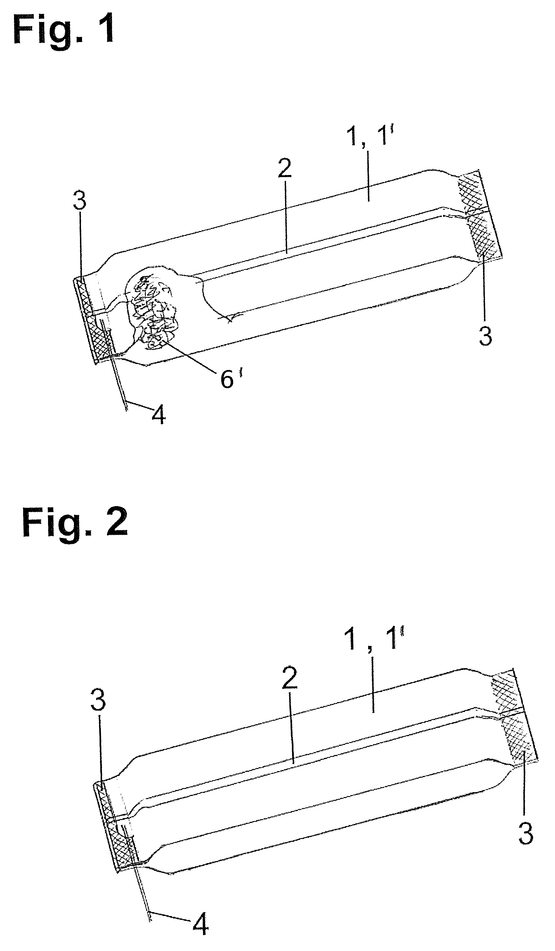

Die Fig. 1 zeigt die Einweg-Abdichtung, bestehend aus dem Flachschlauchabdichtkissen 1, z. B. in Breiten von 100 mm bis 150 mm und Längen von 150 mm bis 1000 mm, mit innenliegendem flüssigen oder pulverisierten Dichtmittel 6a, mit oder ohne Metalleinlage, aus einer, im Bahngasschweißen und Heißsiegelschweißverfahren hergestellten, druckbeständigen, mindestens dreilagigen Thermoplast-Verbundfolie 1 a oder fünflagigen Aluminium-Verbundfolie 1 a, welche mit einem eingeschweißten Thermoplast-Einfüllschlauch 4, zum Befüllen des Abdichtkissens, verbunden ist, der sich an der Längsseite 2 und an einer der Breitseiten 3 des Flachschlauchkissens befindet.

Die Fig. 2 zeigt eine perspektivische Ansicht der Fig. 1, bei der das Einweg-Flachschlauchabdichtkissen 1 kein innenliegendes, flüssiges oder pulverisiertes Dichtmittel enthält.

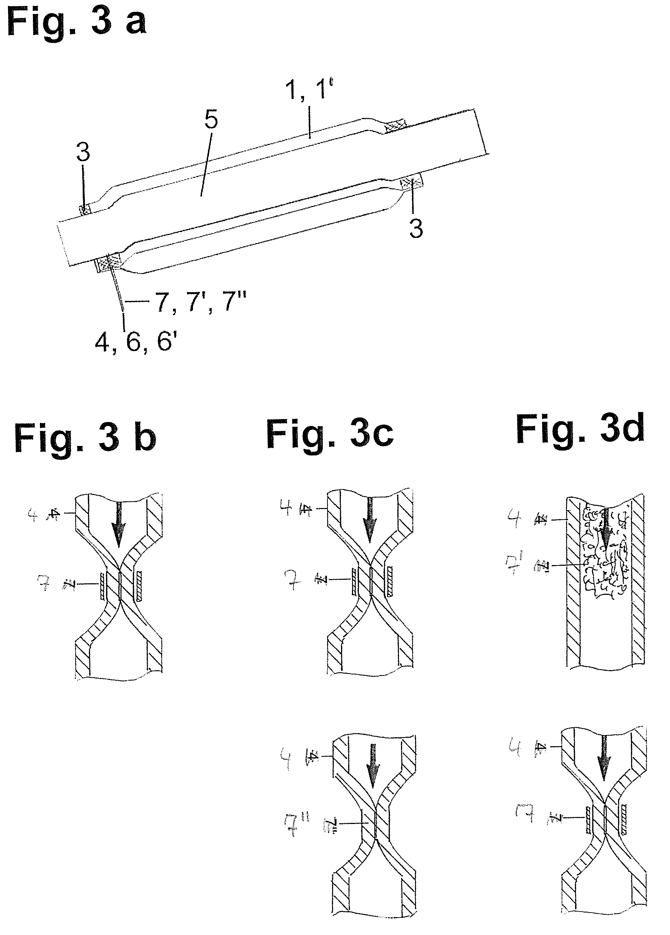

Die Fig. 3a zeigt eine perspektivische Ansicht der Fig. 1 und 2, bestehend aus einem beidseitig außen mit Quellvlies-Dichtband 5 beschichteten Flachschlauchabdichtkissen 1, das mit einem im Heißsiegelschweißverfahren verschweißten Thermoplast-Einfüllschlauch 4a mit oder ohne innenliegendem Metallrohrschlauch versehen ist, dass sich an einer der 15cm bis 100cm langen Längsseiten 2 oder an den 10 bis 15cm großen Stirn- bzw. Breitseiten 3 des Flachschlauchabdichtkissens 1, befindet und bei kreisförmiger Anwendung zur optimalen Druckverteilung dient. Die Ausbildung als Flachschlauchabdichtkissen wird durch Herstellung von druckdichten Verschlüssen in Längsrichtung und an den beiden Enden der Verbundfolien-Oberflächen erzielt. Nach Druckfüllung mit Luft 6 und/oder flüssigem oder pulverisiertem Dichtmittel 6a, wird die Druckdichtigkeit des Thermoplast-Einfüllschlauches 4a, wie in den Fig. 3b bis 3d gezeigt, durch Verpressen des Einfüllschlauches 4a mit einer Metallklemme z. B. in Form einer Metallöse 7 und/oder in Kombination Metallöse 7 und flüssigem oder pulverisiertem Dichtmittel 7a oder Metallöse 7 und Verschweißen mittels Heizklemme 7b erzielt.

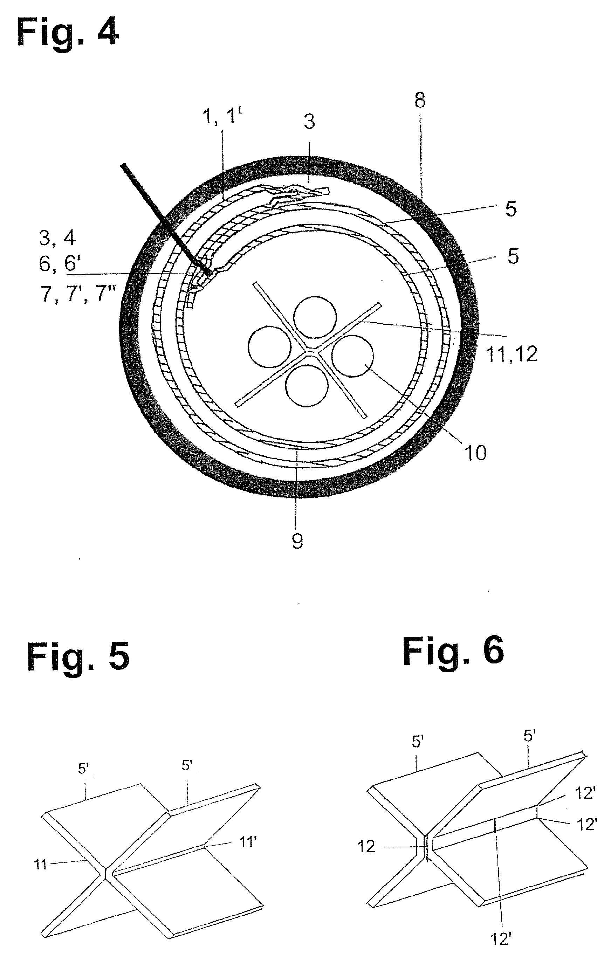

Die Fig. 4 zeigt einen Querschnitt einer der Fig. 3 ähnlichen Einwegabdichtvorrichtung 1, die zur kreisförmigen Verwendung 9, zur Kabel- und/oder Rohr-Zwischenraumabdichtung mit Wechselwirkung bei Wärme und Wasser, in mit mehreren Kabeln und/oder Rohren 10 belegten Kanälen 8, Rohren 8 und/oder Wanddurchführungen 8, vorgesehen ist, die quellvliesbeschichtet 5 ist und einen hochfrequenzverschweißten Quellvlies-Medium-Abdichtstern 11 oder einen Quellvlies-Einschiebe-Abdichtstern 12 mit zwei Längsnähten 12a und einer Quernaht 12a enthält.

Je nach Anwendungsbereich wird das Flachschlauchabdichtkissen 1 kreisförmig 9 zwischen einer Wanddurchführung 8 bzw. Kabelschutzrohr 8 und einem Medienrohr 8 oder Mehrfach-Medienrohr 8 bzw. Mehrfach-Kabel 8 eingelegt. Durch Befüllen der Vorrichtung über den Thermoplast-Einfüllschlauch 4, 4a, mit oder ohne metallische Einlage z. B. mit Luft 6 und/oder flüssigem oder pulverisiertem Dichtmittel 6a werden die Hohlräume mit dem Quellvlies-Dichtband 5 oder einem Quellvlies-Abdichtstern 11, 12 ausgefüllt. Nach Zerstören des Flachschlauchabdichtkissens 1 ist eine Demontage innerhalb einer Minute möglich und das Flachschlauchabdichtkissen 1 kann im Hausmüll entsorgt werden.

Die Fig. 5 zeigt eine perspektivische Ansicht der in Fig. 4 gezeigten Vierkammer-Quellvlies-Medium-Abdichtstern-Zwischenraumabdichtung 11, hergestellt aus mindestens zwei übereinander gelegten Quellvlies-Dichtbändern 5a, die mittig in Längsrichtung hochfrequenzverschweißt sind 11 a.

Die Fig. 6 zeigt eine ähnliche Vorrichtung wie in den Figuren 4 und 5, die als Vierkammer-Quellvlies-Einschiebe-Abdichtstern 12 mit Wechselwirkung bei Wärme und Wasser ausgebildet ist, bei dem an den Quellvlies-Dichtbändern 5a in Längsrichtung zwei 12a und mittig eine 12a Hochfrequenzschweißung und/oder Naht angebracht sein können.

Bei den unterschiedlichen Ausgestaltungen wird die abdichtende Wirkung durch zwei Funktionen erreicht. Die erste abdichtende Funktion hat das Flachschlauchabdichtkissen 1 mit Schlauchanschluss, das unter Druck das Quellvlies-Dichtband 5, 5a und/oder die Abdichtsterne 11, 12 in die Zwischenräume presst. Die zweite abdichtende Funktion kommt erst zum Tragen, wenn Wasser oder Chemikaliengemische pH2, pH12 und/oder ca. 80 % Benzin, Diesel, Kerosin oder Paraffinölgemisch das Quellvlies-Dichtband 5, 5a, 11a, 12a aktiviert. Bei Flüssigkeitseintritt quillt ein im, z. B. als PP-Vlies-Dichtband ausgeführtes, Quellvlies-Dichtband 5, 5a, 11 a, 12a eingebettetes Polymer an den nicht verpressten Abdichtstellen auf und schafft durch seine extrem dichte, gelförmige, in das PP-Vlies-Dichtband eingebettete Dichtschicht den Schutz z.B. gegen Wasserfortleitung während des Wassereintritts. Nach Trocknung der Gelschicht kann ein Überdruck bei Wärme von ≥0,3bar durch das Quellvlies-Dichtband 5, 5a, 11a, 12a entweichen; bei neuem Wassereintritt quillt das Polymer wieder zuverlässig auf.

Bei der Befüllung des Flachschlauchabdichtkissens über den Thermoplast-Einfüllschlauch 4 bzw. den mit Thermoplast umhüllten Metallrohrschlauch 4, z. B. mit Luft, werden die Quellvlies-Dichtbänder 5, 5a, 11a, 12a in die Zwischenräume der Kabel gepresst.

Zum Abdichten von Kabel- und/oder Rohrzwischenräumen bei mehrfach belegten Kabelschutzrohren 8 oder Wanddurchführungen 8 wird ein Quellvlies-Abdichtstern 11, 12 zwischen die zwei, drei oder vier Kabel und/oder Rohre 8 eingelegt. Nach Aufpumpen z. B. mit Luft wird je nach Anwendungsbereich eine Abdichtungsvorrichtung mit Wechselwirkung erzielt, so dass bei Kabelschutzrohren 8 der Überdruck entweichen kann und vom Rohrende eine Wasserdruckdichtigkeit bis 5m bei einer Wassersäule von -0,5 bar erzielt wird.

### Bezugszeichenliste

- 1: Flachschlauchabdichtkissen
- 1a: Drei- oder fünflagige, druckbeständige Thermoplast-Verbundfolie
- 2: Längsseiten im Bahngasschweißverfahren verschweißt
- 3: Breitseiten im Heißsiegelschweißverfahren verschweißt
- 4: Thermoplast-Einfüllschlauch mit oder ohne innenliegendem Metallrohrschlauch
- 4a: Thermoplast-Einfüllschlauch mit Heißsiegelverschweißung
- 5: Quellvlies-Dichtband an den Außenseiten des Abdichtkissens
- 5a: Quellvlies-Dichtband 200g/m² oder 480g/m²
- 6: Abdichtkissen-Luft-Überdruckfüllung
- 6a: Flüssiges oder pulverisiertes Dichtmittel
- 7: Überdruckdichter Verschluss bestehend aus einer Metallklemme
- 7a: Überdruckdichter Verschluss bestehend aus einer Metallklemme und flüssigem oder pulverisiertem Dichtmittel
- 7b: Überdruckdichter Verschluss mittels Heizklemme verschweißt
- 8: Hohlraum, Kabelschutzrohr, Wanddurchführung
- 9: Einlagige, kreisförmige Anordnung des Flachschlauchabdichtkissens
- 10: Belegung mit Kabel oder Rohren
- 11: Hochfrequenzverschweißter Quellvlies-Medium-Abdichtstern
- 11 a: Quellvlies-Dichtband mit einmal längs hochfrequenzverschweißter Schweißnaht
- 12: Quellvlies-Einschiebe-Abdichtstern mit Nähten
- 12a: Quellvlies-Dichtband mit zwei Längs-Nähten und einer Mitten-Naht

## Patentansprüche

1. Vorrichtung zur Einweg-Kabel-Abdichtung gegen Wassereintritt und Rauchdurchdringung in Zwischenräumen und in Hohlräumen, Kabelschutzrohren oder Wanddurchführungen (8), die mit Kabeln (10) und/oder Rohren (10) belegt sind,
**dadurch gekennzeichnet,**
**dass** die Vorrichtung aus einem in der Länge und Breite festgelegten Flachschlauchabdichtkissen (1) besteht, das als Zwischenraumabdichtung an seinen Außenseiten mit einem Quellvlies-Dichtband (5) ausgerüstet ist, das an einer Längsseite (2) oder an einer Breitseite (3) mit einem Thermoplast-Einfüllschlauch (4) oder einem mit Thermoplast umhüllten Metallrohrschlauch (4) verschweißt ist, das mit einem gasförmigem Medium (6) und/oder Dichtmittel befüllt (6a) und überdruckdicht mit einer Metallklemme (7) oder durch die Kombination von Metallklemme (7) und Dichtmittel (6a) oder Metallklemme (7) und Verschweißen mittels Heizklemme (7b) verschlossen ist.

2. Vorrichtung nach Anspruch 1,
**dadurch gekennzeichnet,**
**dass** eine einlagige, kreisförmige Anordnung (9) des Flachschlauchabdichtkissens (1) vorgesehen ist, wobei der Thermoplast-Einfüllschlauch (4a) für eine Summenleckrate von ≤200 mbarl/Jahr im Heißsiegelschweißverfahren mit dem Flachschlauchabdichtkissen (1) verbunden ist,
wobei die Dichtigkeit des Thermoplast-Einfüllschlauchs (4a) durch Verklemmen mittels Metallklemme (7) oder durch die Kombination Metallklemme (7) und Dichtmittel (6a) oder Metallklemme (7) und Verschweißen mittels Heizklemme (7b) bis 3bar überdruckdicht erzielbar ist.

3. Vorrichtung nach Anspruch 1 oder 2,
**dadurch gekennzeichnet,**
**dass** das Flachschlauchabdichtkissen (1) im Anwendungsbereich als Einzelelement voll- oder halbkreisförmig im Hohlraum-, Kabelschutzrohr- oder Wanddurchführungsumfang (8) angeordnet ist, wobei sich der Thermoplast-Einfüllschlauch (4, 4a) mindestens an einem Ende (3) des Flachschlauchabdichtkissens (1) befindet,

4. Vorrichtung nach den Ansprüchen 1 bis 3,
**dadurch gekennzeichnet,**
**dass** sie außenliegend in Längsrichtung zusätzlich ein elastisches, nicht dauerhaft selbstklebendes, nach Wasserkontakten schnell quellendes Quellvlies-Dichtband (5a) mit einem Flächengewicht von 200 g/m² bis 480 g/m² aufweist.

5. Vorrichtung nach einem der Ansprüche 1 und 4,
**dadurch gekennzeichnet,**
**dass** beim Abdichten von mit Kabeln (10) und/oder Rohren (10) durchzogenen Hohlräumen, Kabelschutzrohren oder Wanddurchführungen (8) im Bereich der Berührungsstellen von Kabeln (10) und/oder Rohren (10) eine Umwicklung aus einem Quellvlies-Dichtband (5, 5a) mit bzw. ohne Klebefolie eingesetzt ist und sich im Innenraum Füllelemente oder Quellvlies-Abdichtsterne (11, 12) befinden, die aus Dichtbandmaterial (5, 5a) hergestellt sind.

6. Vorrichtung nach Anspruch 5,
**dadurch gekennzeichnet,**
**dass** die Quellvlies-Abdichtsterne (12), zum Einschieben zwischen Kabeln (10) und/oder Rohren (10), aus zwei übereinander gelegten Quellvlies-Abdichtbändern (5, 5a) mit zwei Längsnähten und einer Quernaht (12a) und/oder zwei übereinander gelegten Quellvlies-Abdichtbändern (5, 5a) mit einer ≥5 mm breiten Längsschweißnaht (11 a), hergestellt sind.

7. Vorrichtung nach den Ansprüchen 1 und 2,
**dadurch gekennzeichnet,**
**dass** das Flachschlauchabdichtkissen (1) über den Thermoplast-Einfüllschlauch (4, 4a) mit einem gasförmigen Medium (6) und/oder flüssigem und/oder pulverisiertem Dichtmittel (6a) gefüllt ist und der bis 3 bar überdruckdichte Einfüllschlauch (4, 4a) durch Verpressen mittels Metallklemme (7) oder durch die Kombination von Metallklemme (7) und flüssiges und/oder pulverisiertes Dichtmittel (6a) oder Metallklemme (7) und Verschweißen mittels Heizklemme (7b) hergestellt ist.

8. Vorrichtung nach einem der Ansprüche 1, 2, 3 und 7,
**dadurch gekennzeichnet,**
**dass** das Flachschlauchabdichtkissen (1) aus einem gefalteten Band oder Flachschlauch hergestellt ist, der je nach dem Anwendungsbereich aus Thermoplast, Elastomeren und/oder schwer entflammbaren Thermoplast-Elastomer-Gemischen besteht, wobei diese Stoffe metallische und/oder metallfreie Einlagen aufweisen.

9. Vorrichtung nach einem der Ansprüche 1, 2, 3 und 7,
**dadurch gekennzeichnet,**
**dass** das Band des Flachschlauchabdichtkissens (1, 1a) mit metallischer Einlage vorzugsweise mindestens aus einer fünflagigen Thermoplast-Verbundfolie (1a) mit dem Aufbau
- 100 bis 250 µm PE
- 10 bis 23 µm PET
- 9 bis 5 µm ALU
- 10 bis 3 µm PET
- 100 bis 250 µm PE
hergestellt ist.

10. Vorrichtung nach einem der Ansprüche 1, 2, 3, 7, 8 und 9,
**dadurch gekennzeichnet,**
**dass** das Flachschlauchabdichtkissen (1) mit metallischer Einlage eine Summenleckrate von 2,7 mbarl/Jahr und das dreilagig aufgebaute, metallfreie Abdichtkissen eine solche von ≤ 200 mbarl/Jahr aufweist.

11. Vorrichtung nach einem der Ansprüche 1, 2, 3, 7, 8 und 10
**dadurch gekennzeichnet,**
**dass** das Flachschlauchabdichtkissen aus einer dreilagigen Thermoplast-Verbundfolie (1a) ohne metallische Einlage mit dem Aufbau
- 100 bis 250 µm PE
- 9 bis 23 µm PET oder gleichwertige PBT, PPE, PP, Tyvek < 64,4 g/m² etc.
- 100 bis 250 µm PE
hergestellt ist.
